# EUROPEAN PATENT SPECIFICATION

(11) **EP 2 648 243 B1**
(45) Date of publication and mention of the grant of the patent: **07.10.2015**
(21) Application number: 12179784.9
(22) Date of filing: 09.08.2012
(51) Int. Cl.: H01M 2/10, H01M 2/20, H01M 2/30

(54) **Battery module**
Batteriemodul
Module de batterie

(30) Priority: 03.04.2012 US 201261619675 P; 26.07.2012 US 201213559364
(43) Date of publication of application: 09.10.2013
(73) Proprietor: Samsung SDI Co., Ltd., Gyeonggi-do (KR); Robert Bosch GmbH, 70442 Stuttgart (DE)
(72) Inventor: Ahn, Jang-Gun, 446-711 Yongin-si (KR)
(74) Representative: Gulde & Partner

(56) References cited:
- EP-A2- 2 523 238
- DE-A1-102009 025 579
- US-A- 4 156 552
- US-A- 5 496 657
- US-A- 5 662 497
- US-A1- 2007 026 306
- US-A1- 2010 266 889
- US-A1- 2012 058 383

## Description

### BACKGROUND

### 1. Field

An aspect of the present invention relates to a battery module, and more particularly, to a battery module having a terminal member of a new structure.

### 2. Description of the Related Art

A high-power battery module using a non-aqueous electrolyte with high energy density has recently been developed. The high-power battery module is configured as a large-capacity battery module manufactured by connecting a plurality of battery cells in series so as to be used in driving motors of devices requiring high power, e.g., electric vehicles and the like.

Typically, the battery module may include a plurality of battery cells, and neighboring battery cells are electrically connected by a bus-bar. Conventionally, the bus-bar connected neighboring battery cells through a fastening structure such as a bolt and a nut. Recently, various studies have been conducted to simplify the fastening structure of the bus-bar described above. US 2012/0058383 describes an assembled battery with a terminal connection member connecting a pair of electrode terminals. US 2007/0026306 describes a battery module with a connecting member for interconnecting electrode terminals. US 2010/0266889 is directed to a secondary battery module comprising a plurality of bus bars. A modular terminal connector assembly is described in US Patent 5,662,497. A battery arrangement with a connecting bolt penetrating current conductors is of concern in DE 10 2009 025 579. A quick disconnect intercell busbar for dep submergence batteries is disclosed in US Patent 4,156,552 and US Patent 5,496,657 is concerned with a modular battery system comprising individual interconnected modules interconnected by conductive connectors.

### SUMMARY

Embodiments provide a battery module capable of simplifying the fastening structure of a bus-bar through a simple structural modification.

Embodiments also provide a battery module capable of reducing production cost and improving processing efficiency.

The present invention is defined by the battery module according to claim 1.

According to an aspect of the present invention, a battery module including: a plurality of battery cells fixed by a housing; a terminal provided on each of the battery cells and having a fastening portion; and a bus-bar fastened to the fastening portions of neighboring battery cells through forcible insertion so that the neighboring battery cells are electrically connected to each other. The forcible insertion results in a coupling fastening the battery cells against relative movements to each other in an insertion direction or in an direction opposite to the insertion direction. This coupling is firmly maintained since cells are further fixed by the housing.

The terminal includes a terminal main body, the fastening portion to which the bus-bar is fastened, and a fastening window connected to the fastening portion so as to check a fastening state between the bus-bar and the fastening portion.

The section of the fastening portion in parallel with the gravity direction may be formed in a rectangular shape along a direction being perpendicular to an insertion direction. That is, the section of the fastening portion perpendicular to the insertion direction, the section being in parallel with the gravity direction if the battery module is properly positioned, may be formed in the rectangular shape.

The bus-bar may include a bus-bar main body and an extending portion extended from the bus-bar main body so as to be provided between the terminals. That is, bus-bar main body preferably may extend in the insertion direction and insertion direction of the bus-bar main body into one of the fastening portions is opposite to insertion direction of the bus-bar main body into another one of the fastening portions.

The battery module may further include a first latching projection provided on the bus-bar main body and having a shape corresponding to that of the fastening window.

The battery module may further include a second latching projection provided on the bus-bar main body and having a plurality of projections in a region corresponding to the fastening window.

The bus-bar may include fastening ribs provided in at least a portion of the bus-bar main body and a fastening groove provided between the fastening ribs.

The battery module may further include a third latching projection provided on the fastening rib and exposed to the fastening window.

The bus-bar may be formed in the shape of a bar.

The terminal may include a terminal main body and the fastening portion to which the bus-bar is fastened.

The section of the fastening portion in parallel with the gravity direction is formed in a circular or elliptical shape along a direction being perpendicular to an insertion direction. That is, the section of the fastening portion perpendicular to the insertion direction, the section being in parallel with the gravity direction if the battery module is properly positioned, may be formed in the circular or elliptical shape.

The bus-bar may be formed in the shape of a hollow rod.

The battery module may further include an auxiliary bus-bar inserted into neighboring bus-bars, wherein an outer diameter of a bus-bar main body of the auxiliary bus-bar corresponds to an inner diameter of the bus-bar main body of the neighboring bus-bar. Preferably, the auxiliary bus-bar is inserted into the neighboring bus-bars within the fastening portion.

The fastening rib and the fastening groove may be provided to both sides of the bus-bar main body.

The fastening rib and the fastening groove of neighboring bus-bar main bodies may be complementary coupled to each other.

The bus-bar may include a bus-bar main body and extending portions to be fastened to the fastening portions respectively, wherein the extending portions extend from both sides of the bus-bar main body in a perpendicular direction so as to provide the bus-bar with a U-shape. That is, bus-bar main body preferably may extend perpendicularly to the insertion direction into one of the fastening portions which is the same as insertion direction into another one of the fastening portions.

As described above, according to the present invention, it is possible ) to provide a battery module capable of simplifying the fastening structure of a bus-bar through a simple structural modification.

Further, the fastening structure of the bus-bar is simplified, so that it is possible to reduce production cost and to improve processing efficiency.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a battery module according to a first embodiment of the present invention.
FIG. 2A is a perspective view illustrating a terminal of the battery module of FIG. 1 and a bus-bar fastened to the terminal.
FIG. 2B is an exploded perspective view of FIG. 2A.
FIGS. 3A to 3C are enlarged perspective views showing bus-bars modified differently from the first embodiment of the present invention.
FIG. 4 is a perspective view of a battery module according to a second embodiment of the present invention.
FIG. 5A is a perspective view illustrating a terminal of the battery module of FIG. 4 and a bus-bar fastened to the terminal.
FIG. 5B is an exploded perspective view of FIG. 5A.
FIG. 6 is an enlarge perspective view showing a bus-bar modified differently from the second embodiment of the present invention.
FIG. 7 is a perspective view of a battery module according to a third embodiment of the present invention.
FIG. 8A is a perspective view illustrating a terminal of the battery module of FIG. 7 and a bus-bar fastened to the terminal.
FIG. 8B is an exploded perspective view of FIG. 8A.
FIG. 9 is a perspective view of a battery module according to a fourth embodiment of the present invention.
FIG. 10A is a plan view illustrating a terminal of the battery module of FIG. 9 and a bus-bar fastened to the terminal.
FIG. 10B is an exploded perspective view showing a portion of FIG. 9.
FIG. 11 is a perspective view of a battery module according to a fifth embodiment of the present invention.
FIG. 12A is a perspective view illustrating a terminal of the battery module of FIG. 11 and a bus-bar fastened to the terminal.
FIG. 12B is an exploded perspective view of FIG. 12A.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

Exemplary embodiments of the present invention will be described with reference to the accompanying drawings.

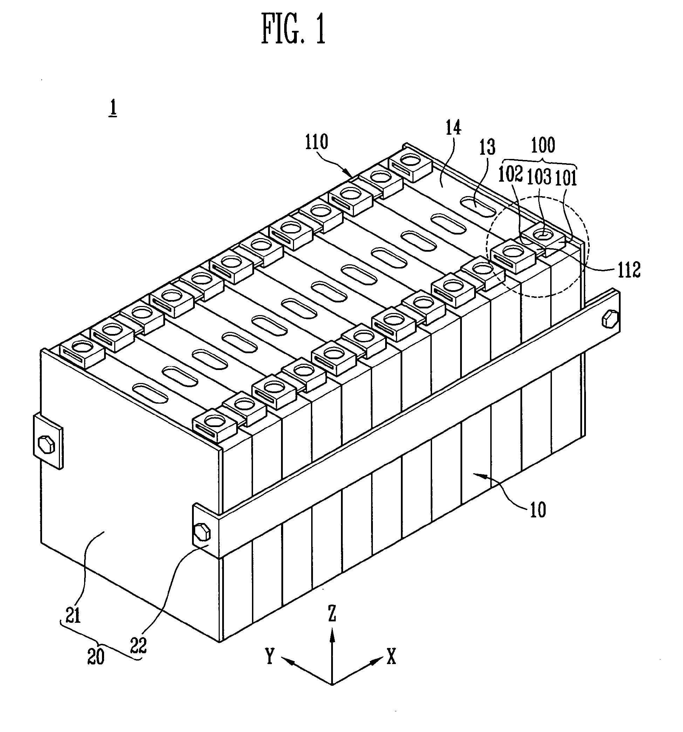

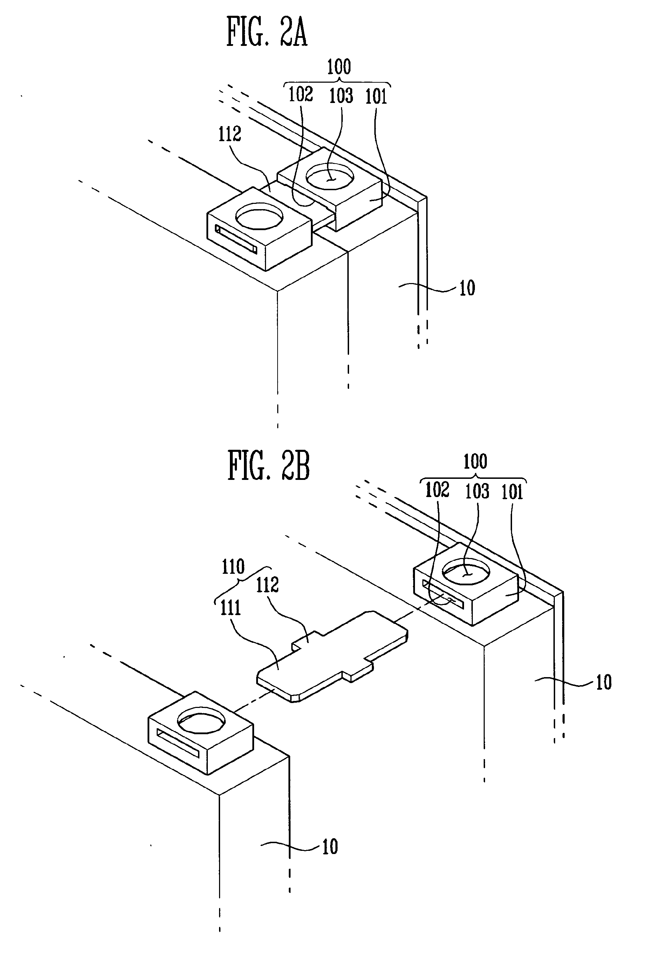

FIG. 1 is a perspective view of a battery module according to a first embodiment of the present invention. FIG. 2A is a perspective view illustrating a terminal of the battery module of FIG. 1 and a bus-bar fastened to the terminal. FIG. 2B is an exploded perspective view of FIG. 2A.

Referring to FIG. 1, the battery module 1 according to the first embodiment of the present invention includes a plurality of battery cells 10; a terminal 100 provided on the each of the battery cells 10 and having a fastening portion 102; and a bus-bar 110 fastened to the fastening portions 102 of neighboring battery cells 10 so that the neighboring battery cells 10 are electrically connected to each other.

The battery cell 10 may include a battery case having one opened surface, and an electrode assembly and an electrolyte, accommodated in the battery case. The electrode assembly and the electrolyte generate energy by an electrochemical reaction, and the battery case is sealed by a cap plate 14. The cap plate 14 may be provided with the terminal 100, the bus-bar 110 fastened to the terminal 100, and a vent portion 13. The terminal 100 may be composed of positive and negative electrode terminals having different polarities from each other. The vent portion 13 is a safety means of the battery cell 10, and acts as a path through which gas generated in the inside of the battery cell 10 is exhausted to the outside of the battery cell 10. The positive and negative electrode terminals of the neighboring battery cells 10 may be electrically connected to each other through the bus-bar 110.

The plurality of battery cells 10 may be aligned, and a housing 20 may be used to fix the alignment of the battery cells 10. The housing 20 may include end plates 21 and side plates 22. The end plates 21 are provided opposite to each other, so that each of the end plates 21 faces a long side surface that is a wide surface of an outermost battery cell 10. The side plates 22 connect the end plates 21 facing the respective outermost battery cells 10, and each of the side plates 22 faces short side surfaces that are narrow surfaces of the battery cells 10. The end plates 21 and the side plates 22 are used to fix the plurality of battery cells 10, and may be variously modified depending on the design of the battery module 1.

The bus-bar 110 according to the first embodiment of the present invention may be coupled to the terminal 100 through forcible insertion coupling. In this case, the bus-bar 110 and the terminal 100 are not connected by a fastener such as a bolt and a nut or connected by a method such as welding, and therefore, the connection structure between the bus-bar 100 and the terminal 100 may not be firmly maintained. However, the battery cells 10 are fixed by the housing 20 composed of the end plates 21 and the side plates 22, and thus the coupling force between the bus-bar 110 and the terminal can be firmly maintained. After the bus-bar 110 and the terminal 100 are coupled to each other, the bus-bar 110 and the terminal 100 may be additionally welded if necessary.

Referring to FIGS. 2A and 2B, the terminal 100 according to the first embodiment of the present invention includes a terminal main body 101, the fastening portion 102 to which the bus-bar 110 is fastened, and a fastening window connected to the fastening portion 102 so as to check a fastening state between the bus-bar 100 and the fastening portion 102. Here, the section of the fastening portion 102 in parallel with the gravity direction is formed in a rectangular shape, and the bus-bar 110 fastened to the fastening portion 102 is formed in the shape of a bar corresponding to the fastening portion 102.

The bus-bar 110 coupled to the terminal 100 includes a bus-bar main body 111 and an extending portion 112 extended from the bus-bar main body 111 so as to be provided between the terminals 100. Here, the extending portion 112 may serve as a kind of stopper, and the length of the bus-bar main body 111 substantially fastened to the fastening portion 102 may be adjusted due to the extending portion 112.

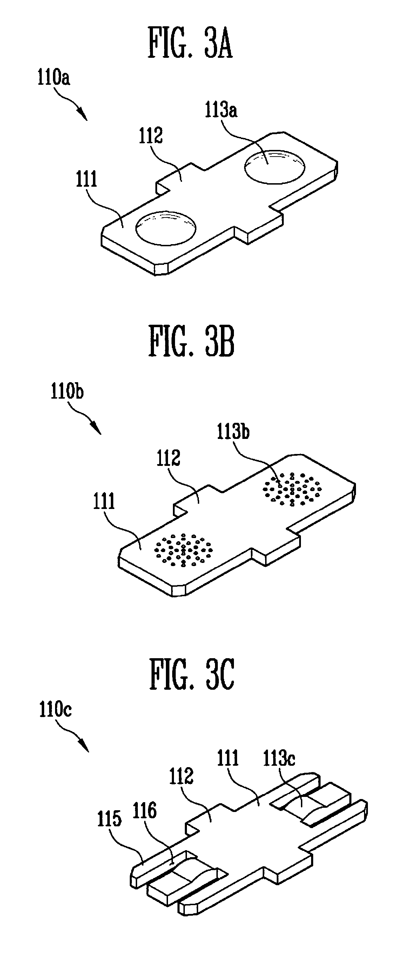

Hereinafter, bus-bars modified differently from the first embodiment of the present invention will be described with reference to FIGS. 3A to 3C.

Referring to FIG. 3A, a first latching projection 113a having a shape corresponding to the fastening window 103 is further provided on a bus-bar main body 111 in a bus-bar 110a. The first latching projection 113a may be formed in a concave shape such as a concave lens.

Referring to FIG. 3B, a second latching projection 113b is further provided in a region corresponding to the fastening window 103 on a bus-bar main body 111 in a bus-bar 110b. The second latching projection 113b may be formed in a shape composed of a plurality of projections.

Referring to FIG. 3C, a fastening groove 116 provided between fastening ribs 115 is provided in at least a portion of a bus-bar main body 111 in a bus-bar 110c. A third latching projection 113c exposed to the fastening window 103 is further provided on the fastening rib 115.

The first, second or third latching projection 113a, 114 or 113c shown in FIGS. 3A to 3C may be accommodated in a space secured by the fastening window 103 connected to the fastening portion 102.

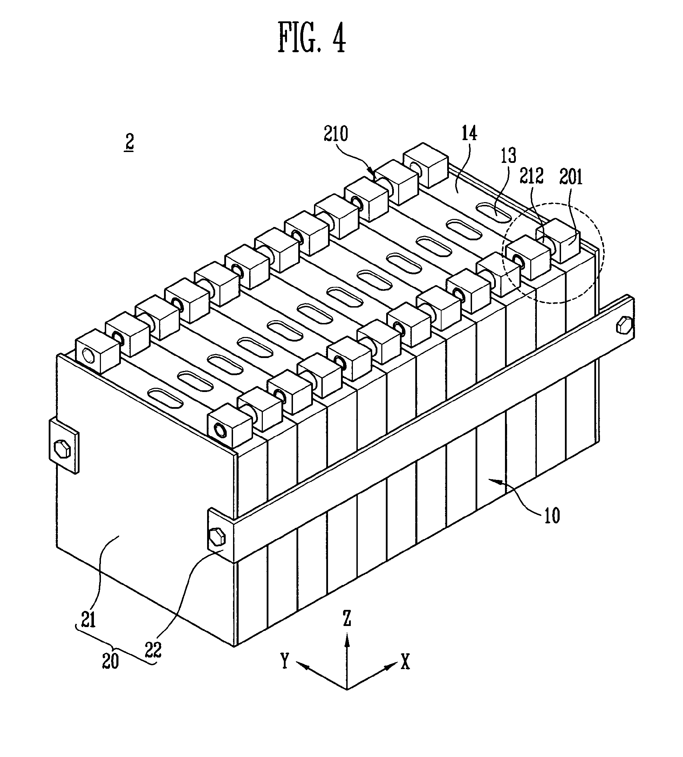

Hereinafter, a battery module according to a second embodiment of the present invention will be described with reference to FIGS. 4 to 5B. In the second embodiment, descriptions of components identical or similar to those of the first embodiment will be omitted, and only components different from those of the first embodiment will be described.

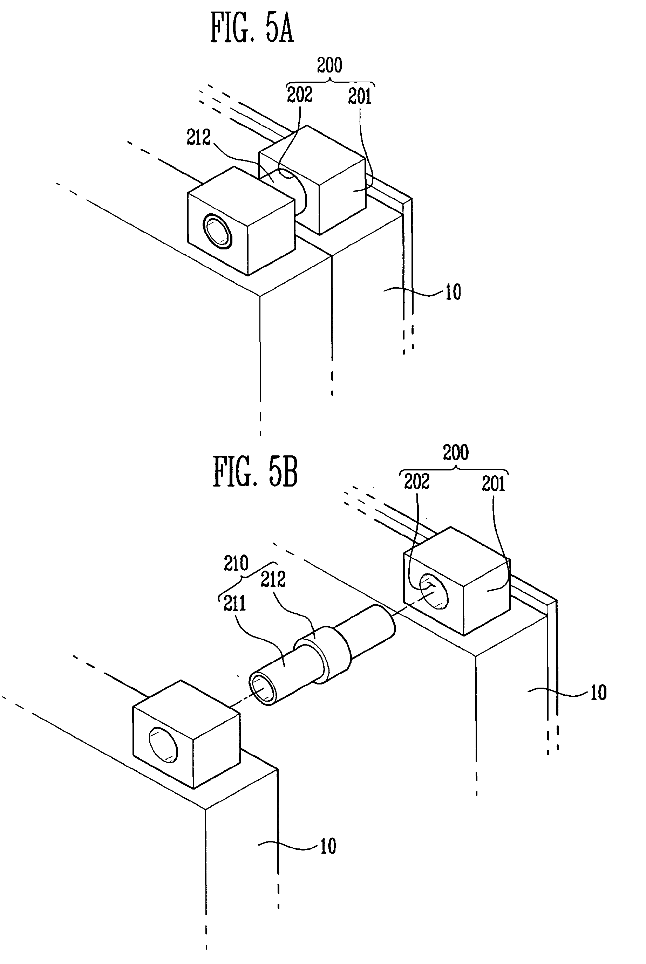

FIG. 4 is a perspective view of a battery module according to a second embodiment of the present invention. FIG. 5A is a perspective view illustrating a terminal of the battery module of FIG. 4 and a bus-bar fastened to the terminal. FIG. 5B is an exploded perspective view of FIG. 5A.

Referring to FIG. 4, the battery module 2 according to the second embodiment of the present invention includes a plurality of battery cells 10; a terminal 200 provided on each of the battery cells 10 and having a fastening portion 202; and a bus-bar 210 fastened to the fastening portions 202 of neighboring battery cells 10 so that the neighboring battery cells 10 are electrically connected to each other.

The battery cell 10 may include a battery case having one opened surface, and an electrode assembly and an electrolyte, accommodated in the battery case. The electrode assembly and the electrolyte generate energy by an electrochemical reaction, and the battery case is sealed by a cap plate 14. The cap plate 14 may be provided with the terminal 200, the bus-bar 210 fastened to the terminal 200, and a vent portion 13. The terminal 200 may be composed of positive and negative electrode terminals having different polarities from each other. The vent portion 13 is a safety means of the battery cell 10, and acts as a path through which gas generated in the inside of the battery cell 10 is exhausted to the outside of the battery cell 10. The positive and negative electrode terminals of the neighboring battery cells 10 may be electrically connected to each other through the bus-bar 210.

The bus-bar 210 according to the second embodiment of the present invention may be coupled to the terminal 200 through forcible insertion coupling. In this case, the bus-bar 210 and the terminal 200 are not connected by a fastener such as a bolt and a nut or connected by a method such as welding, and therefore, the connection structure between the bus-bar 200 and the terminal 200 may not be firmly maintained. However, the battery cells 10 are fixed by the housing 20 composed of the end plates 21 and the side plates 22, and thus the coupling force between the bus-bar 210 and the terminal can be firmly maintained. After the bus-bar 210 and the terminal 200 are coupled to each other, the bus-bar 210 and the terminal 200 may be additionally welded if necessary.

Referring to FIGS. 5A and 5B, the terminal 200 according to the second embodiment of the present invention includes a terminal main body 201 and the fastening portion 202 to which the bus-bar 210 is fastened. Here, the section of the fastening portion 202 in parallel with the gravity direction is formed in a circular shape, and the bus-bar 210 fastened to the fastening portion 202 is formed in the shape of a hollow rod corresponding to the fastening portion 202.

The bus-bar 210 coupled to the terminal 200 includes a bus-bar main body 211 and an extending portion 212 extended from the bus-bar main body 211 so as to be provided between the terminals 200. Here, the extending portion 212 may serve as a kind of stopper, and the length of the bus-bar main body 211 substantially fastened to the fastening portion 202 may be adjusted due to the extending portion 212.

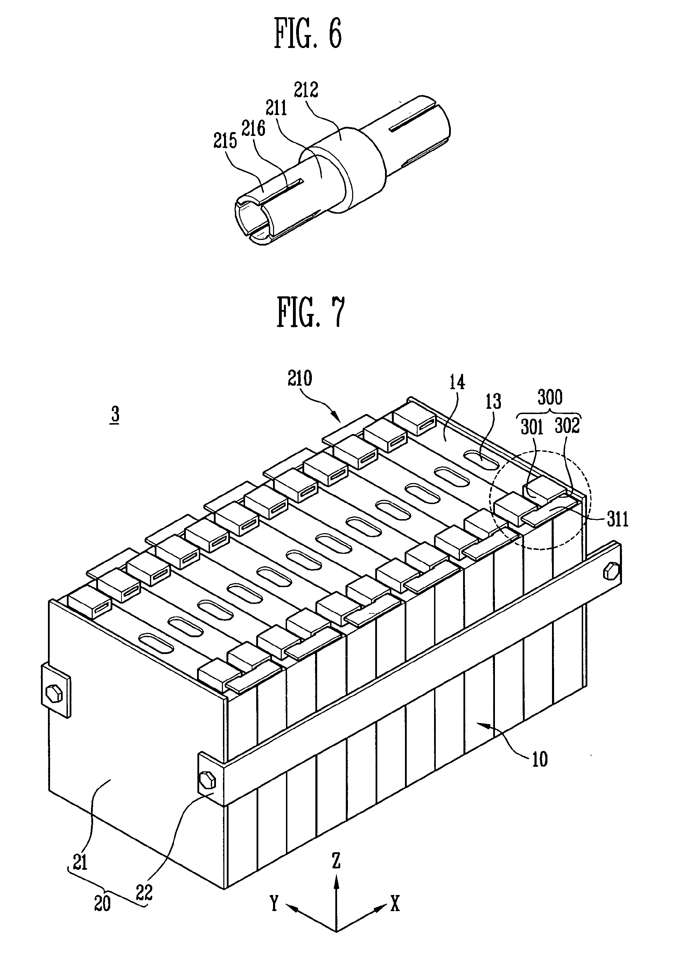

Hereinafter, a bus-bar modified differently from the second embodiment of the present invention will be described with reference to FIG. 6.

A fastening groove 216 provided between fastening ribs 215 is formed in at least a portion of the bus-bar main body 211. The bus-bar main body 211 can be flexibly fastened to the terminal 200 due to the fastening groove 216 provided between the fastening ribs 215.

Hereinafter, a battery module according to a third embodiment of the present invention will be described with reference to FIGS. 7 to 8B. In the third embodiment, descriptions of components identical or similar to those of the first and second embodiments will be omitted, and only components different from those of the first and second embodiments will be described.

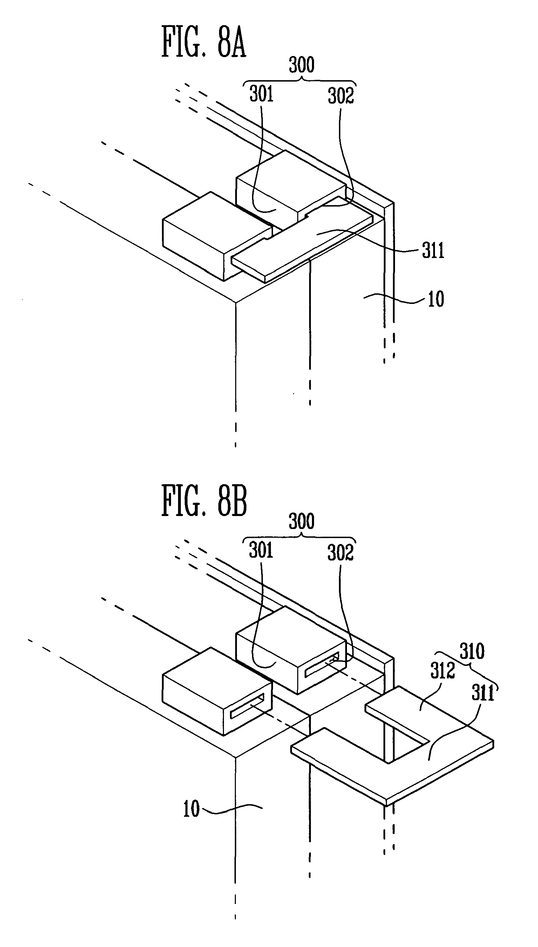

FIG. 7 is a perspective view of a battery module according to a third embodiment of the present invention. FIG. 8A is a perspective view illustrating a terminal of the battery module of FIG. 7 and a bus-bar fastened to the terminal. FIG. 8B is an exploded perspective view of FIG. 8A.

Referring to FIG. 7, the battery module 3 according to the third embodiment of the present invention includes a plurality of battery cells 10; a terminal 300 provided on each of the battery cells 10 and having a fastening portion 302; and a bus-bar 310 fastened to the fastening portions 302 of neighboring battery cells 10 so that the neighboring battery cells 10 are electrically connected to each other.

The battery cell 10 may include a battery case having one opened surface, and an electrode assembly and an electrolyte, accommodated in the battery case. The electrode assembly and the electrolyte generate energy by an electrochemical reaction, and the battery case is sealed by a cap plate 14. The cap plate 14 may be provided with the terminal 300, the bus-bar 310 fastened to the terminal 300, and a vent portion 13. The terminal 300 may be composed of positive and negative electrode terminals having different polarities from each other. The vent portion 13 is a safety means of the battery cell 10, and acts as a path through which gas generated in the inside of the battery cell 10 is exhausted to the outside of the battery cell 10. The positive and negative electrode terminals of the neighboring battery cells 10 may be electrically connected to each other through the bus-bar 310.

The bus-bar 310 according to the third embodiment of the present invention may be coupled to the terminal 300 through forcible insertion coupling. In this case, the bus-bar 310 and the terminal 300 are not connected by a fastener such as a bolt and a nut or connected by a method such as welding, and therefore, the connection structure between the bus-bar 300 and the terminal 300 may not be firmly maintained. However, the battery cells 10 are fixed by the housing 20 composed of the end plates 21 and the side plates 22, and thus the coupling force between the bus-bar 310 and the terminal can be firmly maintained. After the bus-bar 310 and the terminal 300 are coupled to each other, the bus-bar 110 and the terminal 300 may be additionally welded if necessary.

Referring to FIGS. 8A and 8B, the terminal 300 according to the third embodiment of the present invention includes a terminal main body 301 and the fastening portion 302 to which the bus-bar 310 is fastened. Here, the section of the fastening portion 302 in parallel with the gravity direction is formed in a rectangular shape, and the bus-bar 310 fastened to the fastening portion 302 is formed in the shape of a bar corresponding to the fastening portion 302.

The bus-bar 310 coupled to the terminals 300 includes a bus-bar main body 311 and extending portions 312 respectively extended from both sides of the bus-bar main body 311 so as to be fastened to the fastening portions 302 of the terminals 300. Here, the extending portion 312 may serve as a kind of stopper, and the length of the bus-bar main body 311 substantially fastened to the fastening portion 302 may be adjusted due to the extending portion 312. The bus-bar 310 is fastened to the fastening portion 302 on the short side surface of the battery cell 10 so as to facilitate the fastening between the bus-bar 310 and the fastening portion 302.

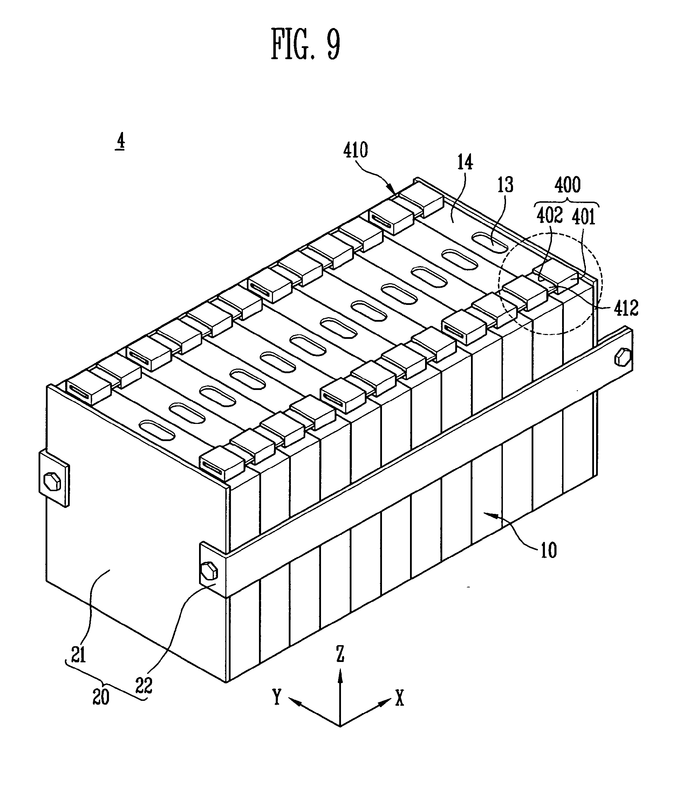

Hereinafter, a battery module according to a fourth embodiment of the present invention will be described with reference to FIGS. 9 to 10B. In the fourth embodiment, descriptions of components identical or similar to those of the first to third embodiments will be omitted, and only components different from those of the first to third embodiments will be described.

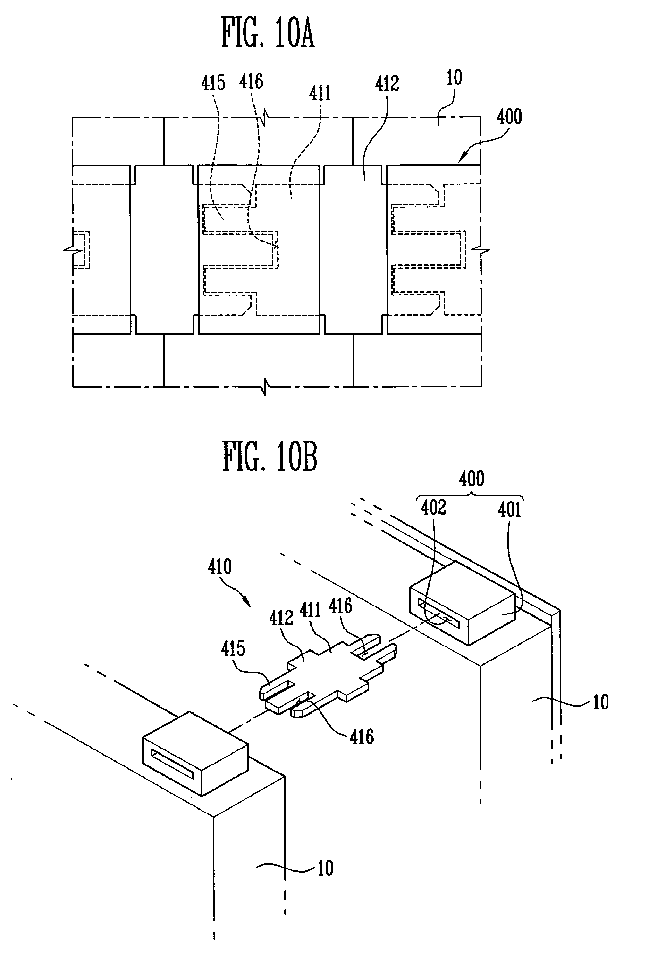

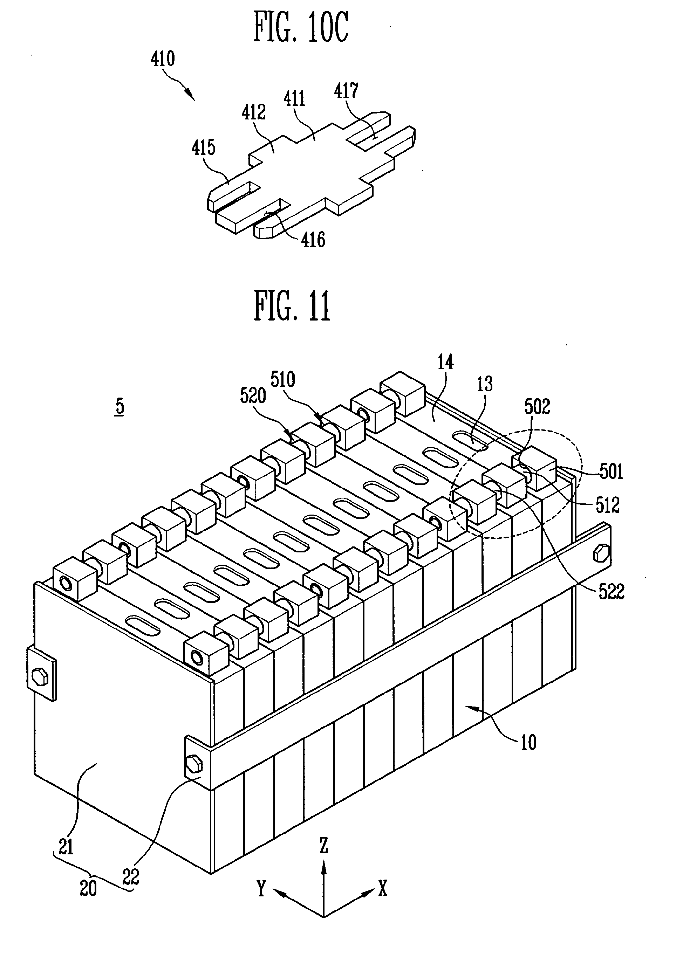

FIG. 9 is a perspective view of a battery module according to a fourth embodiment of the present invention. FIG. 10A is a plan view illustrating a terminal of the battery module of FIG. 9 and a bus-bar fastened to the terminal. FIG. 10B is an exploded perspective view showing a portion of FIG. 9.

Referring to FIG. 9, the battery module 4 according to the fourth embodiment of the present invention includes a plurality of battery cells 10; a terminal 400 provided on each of the battery cells 10 and having a fastening portion 402; and a bus-bar 410 fastened to the fastening portions 402 of neighboring battery cells 10 so that the neighboring battery cells 10 are electrically connected to each other.

The battery cell 10 may include a battery case having one opened surface, and an electrode assembly and an electrolyte, accommodated in the battery case. The electrode assembly and the electrolyte generate energy by an electrochemical reaction, and the battery case is sealed by a cap plate 14. The cap plate 14 may be provided with the terminal 400, the bus-bar 410 fastened to the terminal 400, and a vent portion 13. The terminal 400 may be composed of positive and negative electrode terminals having different polarities from each other. The vent portion 13 is a safety means of the battery cell 10, and acts as a path through which gas generated in the inside of the battery cell 10 is exhausted to the outside of the battery cell 10. The positive and negative electrode terminals of the neighboring battery cells 10 may be electrically connected to each other through the bus-bar 410.

The bus-bar 410 according to the fourth embodiment of the present invention may be coupled to the terminal 400 through forcible insertion coupling. In this case, the bus-bar 410 and the terminal 400 are not connected by a fastener such as a bolt and a nut or connected by a method such as welding, and therefore, the connection structure between the bus-bar 400 and the terminal 400 may not be firmly maintained. However, the battery cells 10 are fixed by the housing 20 composed of the end plates 21 and the side plates 22, and thus the coupling force between the bus-bar 410 and the terminal can be firmly maintained. After the bus-bar 410 and the terminal 400 are coupled to each other, the bus-bar 410 and the terminal 400 may be additionally welded if necessary.

Referring to FIGS. 10A and 10B, the terminal 400 according to the fourth embodiment of the present invention includes a terminal main body 401 and the fastening portion 402 to which the bus-bar 410 is fastened. Here, the section of the fastening portion 402 in parallel with the gravity direction is formed in a rectangular shape, and the bus-bar 410 is fastened to the fastening portion 402.

The bus-bar 410 coupled to the terminals 400 includes a bus-bar main body 411 and extending portions 412 respectively extended from both sides of the bus-bar main body 411 so as to be fastened to the fastening portions 402 of the terminals 400. Here, the extending portion 412 may serve as a kind of stopper, and the length of the bus-bar main body 411 substantially fastened to the fastening portion 402 may be adjusted due to the extending portion 412.

Fastening grooves 416 provided between fastening ribs 415 are formed at both sides of the bus-bar main body 411 in the bus-bar 410. Here, the fastening rib 415 and fastening groove 416 of neighboring bus-bar main bodies 411 are complementary coupled so that the neighboring bus-bar main bodies are connected to each other. The bus-bar main body 411 can be flexibly fastened to the terminal 400 due to the fastening groove 416 provided between the fastening ribs 415.

Hereinafter, a battery module according to a fifth embodiment of the present invention will be described with reference to FIGS. 11 to 12B. In the fifth embodiment, descriptions of components identical or similar to those of the first to fourth embodiments will be omitted, and only components different from those of the first to fourth embodiments will be described.

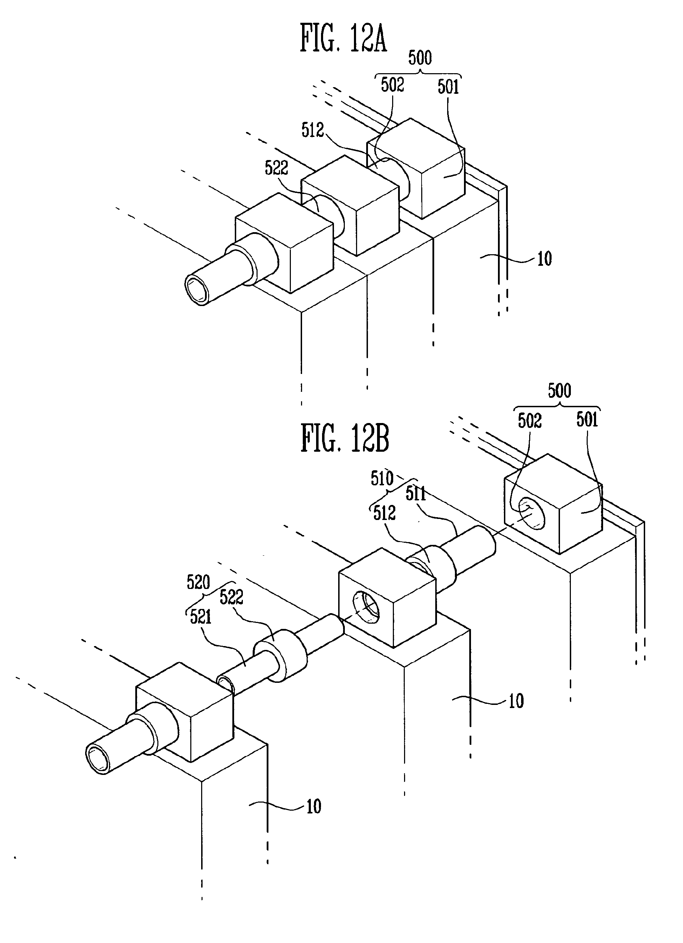

FIG. 11 is a perspective view of a battery module according to a fifth embodiment of the present invention. FIG. 12A is a perspective view illustrating a terminal of the battery module of FIG. 11 and a bus-bar fastened to the terminal. FIG. 12B is an exploded perspective view of FIG. 12A.

Referring to FIG. 11, the battery module 5 according to the fifth embodiment of the present invention includes a plurality of battery cells 10; a terminal 500 provided on each of the battery cells 10 and having a fastening portion 502; and a bus-bar 510 fastened to the fastening portions 502 of neighboring battery cells 10 so that the neighboring battery cells 10 are electrically connected to each other. Here, an auxiliary bus-bar 520 is connected between neighboring bus-bars 510.

The battery cell 10 may include a battery case having one opened surface, and an electrode assembly and an electrolyte, accommodated in the battery case. The electrode assembly and the electrolyte generate energy by an electrochemical reaction, and the battery case is sealed by a cap plate 14. The cap plate 14 may be provided with the terminal 500, the bus-bar 510 fastened to the terminal 500, and a vent portion 13. The terminal 500 may be composed of positive and negative electrode terminals having different polarities from each other. The vent portion 13 is a safety means of the battery cell 10, and acts as a path through which gas generated in the inside of the battery cell 10 is exhausted to the outside of the battery cell 10. The positive and negative electrode terminals of the neighboring battery cells 10 may be electrically connected to each other through the bus-bar 510.

The bus-bar 510 according to the fifth embodiment of the present invention may be coupled to the terminal 500 through forcible insertion coupling. In this case, the bus-bar 510 and the terminal 500 are not connected by a fastener such as a bolt and a nut or connected by a method such as welding, and therefore, the connection structure between the bus-bar 500 and the terminal 500 may not be firmly maintained. However, the battery cells 10 are fixed by the housing 20 composed of the end plates 21 and the side plates 22, and thus the coupling force between the bus-bar 510 and the terminal can be firmly maintained. After the bus-bar 510 and the terminal 500 are coupled to each other, the bus-bar 510 and the terminal 500 may be additionally welded if necessary.

Referring to FIGS. 12A and 12B, the terminal 500 according to the fifth embodiment of the present invention includes a terminal main body 501 and the fastening portion 502 to which the bus-bar 510 is fastened. Here, the section of the fastening portion 502 in parallel with the gravity direction is formed in a circular shape, and the bus-bar 510 fastened to the fastening portion 502 is formed in the shape of a hollow rod corresponding to the fastening portion 502. Here, the auxiliary bus-bar 520 connecting neighboring bus-bars 510 is further provided between the neighboring bus-bars 510. The auxiliary bus-bar 520 is formed in the shape of a hollow rod, corresponding to the bus-bar 510 neighboring thereto. Therefore, the auxiliary bus-bar 520 may be coupled to the bus-bar 510 neighboring thereto so that an auxiliary bus-bar main body 521 of the auxiliary bus-bar 520 is forcibly inserted into the inside of the bus-bar 510.

The bus-bar 510 coupled to the terminals 500 includes a bus-bar main body 511 and an extending portion 512 extended from the bus-bar main body 511 so as to be provided between the terminals 500. The auxiliary bus-bar 520 connecting the neighboring bus-bars 510 also includes the auxiliary bus-bar main body 521 and an auxiliary bus-bar extending portion 522 extended from the auxiliary bus-bar main body 521 so as to be provided between the terminals 500. Here, the extending portion 512 and the auxiliary bus-bar extending portion 522 may serve as a kind of stopper, and the length of the bus-bar main body 511 substantially fastened to the fastening portion 502 may be adjusted due to the extending portion 512 and the auxiliary bus-bar extending portion 522.

While the present invention has been described in connection with certain exemplary embodiments, it is to be understood that the invention is not limited to the disclosed embodiments, but, on the contrary, is intended to cover various modifications and equivalent arrangements included within the scope of the appended claims thereof.

## Claims

1. A battery module (1) including: a plurality of battery cells (10) fixed by a housing (20); a terminal (100, 200, 300, 400, 500) provided on each of the battery cells (10) and having a fastening portion (102, 202, 302, 402, 502) being a hollow within the terminal; and a bus-bar (110a, 110b, 110c, 210, 310, 410, 510) inserted into the fastening portions (102, 202, 302, 402, 502) of neighboring battery cells (10) and fastened thereto through forcible insertion coupling so that the neighboring battery cells (10) are electrically connected to each other, wherein each terminal has a fastening window (103) so as to check a fastening state between the bus-bar (110a, 110b, 110c) and the fastening portion (102).

2. The battery module (1) according to claim 1, wherein a section of the fastening portion (102, 302, 402) is formed in a rectangular shape along a direction being perpendicular to an insertion direction.

3. The battery module (1) according to claim 1 wherein the bus-bar (110) includes a first latching projection (113a) provided on a bus-bar main body (111) and having a shape corresponding to that of the fastening window (102).

4. The battery module (1) according to claim 1 or 2, wherein the bus-bar (110) includes a second latching projection (113b) provided on a bus-bar main body (111) and having a plurality of projections in a region corresponding to the fastening window (102).

5. The battery module (1) according to claim 1 or 2, wherein the bus-bar (110) includes fastening ribs (115, 415) provided in at least a portion of a bus-bar main body and a fastening groove (116, 416) provided between the fastening ribs.

6. The battery module (1) according to claim 5, wherein the fastening rib (115, 215, 415) and the fastening groove (116, 416) are provided to both sides of the bus-bar main body.

7. The battery module (1) according to claim 5 or 6, wherein the bus-bar (110) includes a third latching projection (113c) provided on the fastening rib (115) and exposed to the fastening window (102).

8. The battery module (1) according to claim 7 or 6, wherein the fastening rib (415) and the fastening groove (416) of neighboring bus-bar main bodies (410) are complementary coupled to each other.

9. The battery module (1) according to one of claims 4-8, wherein the bus-bar (110a, 110b, 110c, 210, 410, 510) includes the bus-bar main body (111, 211, 411, 511) and at least one extending portion (112, 212, 412, 512) extended from the bus-bar main body so as to be provided between the terminals.

## Patentansprüche

1. Batteriemodul (1), aufweisend: eine Vielzahl von Batteriezellen (10), die von einem Gehäuse (20) befestigt werden; einen Anschluss (100, 200, 300, 400, 500), der auf jeder der Batteriezellen (10) bereitgestellt wird und einen Befestigungsabschnitt (102, 202, 302, 402, 502), der ein Loch ist, im Anschluss aufweist; und eine Sammelschiene (110a, 110b, 110c, 210, 310, 410, 510), die in die Befestigungsabschnitte (102, 202, 302, 402, 502) benachbarter Batteriezellen (10) eingesetzt wird und durch zwangsweises Einsetzkoppeln daran befestigt wird, so dass die benachbarten Batteriezellen (10) elektrisch miteinander verbunden werden, wobei jeder Anschluss ein Befestigungsfenster (103) aufweist, um einen Befestigungszustand zwischen der Sammelschiene (110a, 110b, 110c) und dem Befestigungsabschnitt (102) zu prüfen.

2. Batteriemodul (1) nach Anspruch 1, wobei ein Abschnitt des Befestigungsabschnitts (102, 302, 402) in einer Rechteckform entlang einer Richtung, die perpendikulär zu einer Einsetzrichtung ist, ausgebildet ist.

3. Batteriemodul (1) nach Anspruch 1, wobei die Sammelschiene (110) einen ersten Rastvorsprung (113a) aufweist, der auf einem Sammelschienen-Hauptkörper (111) bereitgestellt wird und eine Form, die derjenigen des Befestigungsfensters (102) entspricht, aufweist.

4. Batteriemodul (1) nach Anspruch 1 oder 2, wobei die Sammelschiene (110) einen zweiten Rastvorsprung (113b) aufweist, der auf einem Sammelschienen-Hauptkörper (111) bereitgestellt wird und eine Vielzahl von Vorsprüngen in einem Bereich, der dem Befestigungsfenster (102) entspricht, aufweist.

5. Batteriemodul (1) nach Anspruch 1 oder 2, wobei die Sammelschiene (110) Befestigungsrippen (115, 415), die in zumindest einem Abschnitt eines Sammelschienen-Hauptkörpers bereitgestellt werden, und eine Befestigungsnut (116, 416), die zwischen den Befestigungsrippen bereitgestellt wird, aufweist.

6. Batteriemodul (1) nach Anspruch 5, wobei die Befestigungsrippe (115, 215, 415) und die Befestigungsnut (116, 416) an beiden Seiten des Sammelschienen-Hauptkörpers bereitgestellt werden.

7. Batteriemodul (1) nach Anspruch 5 oder 6, wobei die Sammelschiene (110) einen dritten Rastvorsprung (113c), der auf der Befestigungsrippe (115) bereitgestellt wird und zum Befestigungsfenster (102) hin freiliegt, aufweist.

8. Batteriemodul (1) nach Anspruch 7 oder 6, wobei die Befestigungsrippe (415) und die Befestigungsnut (416) benachbarter Sammelschienen-Hauptkörper (410) komplementär miteinander gekoppelt sind.

9. Batteriemodul (1) nach einem der Ansprüche 4-8, wobei die Sammelschiene (110a, 110b, 110c, 210, 410, 510) den Sammelschienen-Hauptkörper (111, 211, 411, 511) und zumindest einen Erstreckungsabschnitt (112, 212, 412, 512), der sich vom Sammelschienen-Hauptkörper erstreckt, um zwischen den Anschlüssen bereitgestellt zu werden, aufweist.

## Revendications

1. Module de batterie (1) comportant : une pluralité d'éléments de batterie (10) fixés par un boîtier (20) ; une borne (100, 200, 300, 400, 500) prévue sur chacun des éléments de batterie (10) et ayant une partie de fixation (102, 202, 302, 402, 502) étant creuse à l'intérieur de la borne ; et une barre omnibus (110a, 110b, 110c, 210, 310, 410, 510) insérée dans les parties de fixation (102, 202, 302, 402, 502) des éléments de batterie voisins (10) et fixée à ceux-ci par un couplage par insertion forcée de sorte que les éléments de batterie voisins (10) soient électriquement reliés les uns aux autres, où chaque borne a une fenêtre de fixation (103) de manière à vérifier un état de fixation entre la barre omnibus (110a, 110b, 110c) et la partie de fixation (102).

2. Module de batterie (1) selon la revendication 1, dans lequel une section de la partie de fixation (102, 302, 402) est formée sous une forme rectangulaire le long d'une direction qui est perpendiculaire à une direction d'insertion.

3. Module de batterie (1) selon la revendication 1, dans lequel la barre omnibus (110) comporte une première saillie de verrouillage (113a) prévue sur un corps principal de barre omnibus (111) et ayant une forme correspondant à celle de la fenêtre de fixation (102).

4. Module de batterie (1) selon la revendication 1 ou 2, dans lequel la barre omnibus (110) comporte une deuxième saillie de verrouillage (113b) prévue sur un corps principal de barre omnibus (111) et ayant une pluralité de saillies dans une région correspondant à la fenêtre de fixation (102).

5. Module de batterie (1) selon la revendication 1 ou 2, dans lequel la barre omnibus (110) comporte des nervures de fixation (115, 415) prévues dans au moins une partie d'un corps principal de barre omnibus et une rainure de fixation (116, 416) prévue entre les nervures de fixation.

6. Module de batterie (1) selon la revendication 5, dans lequel la nervure de fixation (115, 215, 415) et la rainure de fixation (116, 416) sont prévues sur les deux côtés du corps principal de barre omnibus.

7. Module de batterie (1) selon la revendication 5 ou 6, dans lequel la barre omnibus (110) comporte une troisième saillie de verrouillage (113c) prévue sur la nervure de fixation (115) et exposée à la fenêtre de fixation (102).

8. Module de batterie (1) selon la revendication 7 ou 6, dans lequel la nervure de fixation (415) et la rainure de fixation (416) des corps principaux de barre omnibus voisins (410) sont couplées de manière complémentaire l'une à l'autre.

9. Module de batterie (1) selon l'une des revendications 4 à 8, dans lequel la barre omnibus (110a, 110b, 110c, 210, 410, 510) comporte le corps principal de barre omnibus (111, 211, 411, 511) et au moins une partie d'extension (112, 212, 412, 512) s'étendant à partir du corps principal de barre omnibus de manière à être prévue entre les bornes.
